# EUROPÄISCHE PATENTSCHRIFT

(11) **EP 0 563 948 B1**
(45) Veröffentlichungstag und Bekanntmachung des Hinweises auf die Patenterteilung: **13.03.1996**
(21) Anmeldenummer: 93105387.0
(22) Anmeldetag: 01.04.1993
(51) Int. Cl.: B60N 2/50, B60N 2/54

(54) **Unterbau für einen Sitz, insbesondere für einen Fahrzeugsitz**
Seat support structure, in particular for vehicle seats
Structure de support d'un siège, en particulier de sièges de véhicules

(30) Priorität: 03.04.1992 DE 4211095
(43) Veröffentlichungstag der Anmeldung: 06.10.1993
(73) Patentinhaber: GRAMMER AG, D-92224 Amberg (DE)
(72) Erfinder: Meiller, Hermann, W-8450 Amberg (DE)
(74) Vertreter: LOUIS, PÖHLAU, LOHRENTZ & SEGETH

(56) Entgegenhaltungen:
- DE-A- 3 031 175
- FR-A- 2 136 630
- GB-A- 551 813
- US-A- 1 875 500
- US-A- 4 618 185

## Beschreibung

Die Erfindung betrifft einen Unterbau für einen Sitz, insbes. für einen Fahrzeugsitz, gemäß dem Oberbegriff des Anspruchs 1.

Es sind Unterbauten für Sitze bekannt, bei welchen das Scherengestell mit zwei voneinander beabstandeten seitlichen Scheren ausgebildet ist, die miteinander mittels einer Scherengestellachse schwenkbeweglich verbunden sind. Derartige Scherengestelle weisen also zwei Scheren und eine diese verbindende Scherengestellachse auf, d.h. sie bestehen aus mehreren Einzelteilen, die nicht nur eine relativ aufwendige Herstellung sondern auch einen zeit- und kostenintensiven Zusammenbau bedingen, was sich auf die Herstellungskosten eines solchen Unterbaus auswirkt. Diese bekannten Scherengestellesind außerdem üblicherweise mit Rollen ausgebildet, die entlang zugehöriger Linearführungen beweglich sind, was sich nicht nur auf die Komplexität eines solchen bekannten Unterbaus für einen Sitz sondern insbes. auch auf die Mindesthöhe desselben auswirkt.

Ein Unterbau für einen Sitz mit einem Scherengestell, das zwei voneinander beabstandete, seitliche Scheren aufweist, ist aus der GB-A 551 813 bekannt. Die Scheren sind miteinander mittels einer Scherengestellachse verbunden, wobei die jeweils eine seitliche Schere mit einem Schlitz ausgebildet ist, entlang welchem die Scherengestellachse linear beweglich ist. Die Federeinrichtung ist bei diesem Unterbau zwischen den Scheren angeordnet.

Aus der US-A 1 875 500 ist ein Unterbau für einen Fahrzeugsitz bekannt, bei dem jede der beiden seitlichen Scheren nebeneinander angeordnete und voneinander beabstandete Arme aufweist, von welchen jeder mit einer zugehörigen Federeinrichtung versehen ist. Das bedeutet, daß dort vier Arme und vier zugehörige Federeinrichtungen vorgesehen sein müssen. Außerdem ist dort jeder der vier Arme in einem verschwenkbaren Lagerhebel angeordnet, so daß sich insgesamt ein relativ aufwendiger Aufbau mit einer Vielzahl Einzelteile ergibt.

Ein Unterbau der eingangs genannten Art ist aus der FR-A 2 136 630 bekannt. Dort sind die beiden Gestellelemente des Scherengestelles miteinander schwenkbeweglich verbunden. Das bedingt einen Herstellungsaufwand. Ein weiterer Aufwand ist durch die Verbindung der beiden Gestellelemente mit der Sitzplatte und mit dem Grundelement sowie durch die Verbindung der Federeinrichtung mittels einer von der Sitzplatte wegstehenden Lasche gegeben.

Aus der US-A 4 618 185 ist ein Stuhl mit einem Rahmenoberteil und einem Unterbau bekannt, der ein einteiliges Gebilde aus sich überkreuzenden Schenkelelementen aufweist. An der Überkreuzungsstelle ist das eine Schenkelelement am zweiten Schenkelelement linear beweglich geführt vorgesehen. Das wird mittels einer Führungseinrichtung bewerkstelligt. Das Biegen des Unterbaus ist dort mit einem nicht zu vernachlassigenden Aufwand verbunden.

Der Erfindung liegt die Aufgabe zugrunde, einen Unterbau der eingangs beschriebenen Art zu schaffen, bei dem das Scherengestell relativ einfach ausgebildet ist und dessen Mindesthöhe vergleichsweise gering ist.

Diese Aufgabe wird erfindungsgemäß durch die Merkmale des Kennzeichenteiles des Anspruchs 1 gelöst.

Beim erfindungsgemäßen Unterbau besteht das Scherengestell also aus zwei voneinander unabhängigen, getrennten Gestellelementen, deren Handhabung einfacher möglich ist als die bekannter einteiliger Scherengestelle.

Bei einer einfachen Ausbildung des Unterbaus für einen Sitz ist es sogar möglich, auf das zweite Gestellelement zu verzichten und die Sitzplatte des Sitzes einfach am ersten Gestellelement geeignet zu lagern.

Dadurch, daß die beiden Gestellelemente voneinander unabhängig bzw. getrennt sind, ist es selbstverständlich auch sehr einfach und kraft- sowie zeitsparend möglich, die beiden voneinander getrennten Gestellelemente am Grundelement des erfindungsgemäßen Unterbaus für einen Sitz, insbes. für einen Fahrzeugsitz, anzuordnen, was sich auf die Herstellungskosten des Unterbaus und folglich auf die Herstellungskosten des entsprechenden Sitzes vorteilhaft auswirkt. Ein weiterer Vorteil besteht darin, daß der erfindungsgemäße Unterbau auf eine relativ geringe Gesamthöhe zusammenschwenkbar ist, weil sich bspw. keine Rollen-Führungen störend bemerkbar machen.

Eine sehr einfache und mechanisch stabile Ausbildung ergibt sich, wenn beim erfindungsgemäßen Untergestell das erste Gestellelement als Flächen- bzw. Rahmenelement ausgebildet ist, von dessen einem Endabschnitt mindestens ein Ansatz wegsteht, der zur Ausbildung der ersten Schwenkachse in ein zugehöriges Loch im Grundelement einsetzbar ist. Bei einer solchen Ausbildung des Untergestells wird einfach durch zeitsparendes Einstecken des mindestens einen Ansatzes des ersten Gestellelementes in das zugehörige Loch im Grundelement die erste Schwenkachse ausgebildet, um welche das erste Gestellelement in Bezug auf das Grundelement verschwenkbar ist.

Demselben Zweck, d.h. einer einfachen Ausbildung, ist es dienlich, wenn die beiden Schenkelteile des zweiten Gestellelementes als Streifenelemente ausgebildet sind, die miteinander eine gemeinsame Ebene aufspannend mittels des Verbindungselementes verbunden sind, wobei von jedem der beiden Streifenelemente an seinem einen Endabschnitt mindestens ein Ansatz wegsteht, die zur Ausbildung der zweiten Schwenkachse jeweils in ein zugehöriges Loch im Grundelement einsetzbar sind. Derartige von den Gestellelementen wegstehende Ansätze und die zugehörigen Löcher im Grundelement sind sehr einfach realisierbar, so daß sich im Vergleich zu Untergestellen, bei denen das Scherengestell mit Rollen und Linearführungen ausgebildet sind, erfindungsgemäß einfache und preisgünstige Verhältnisse ergeben.

Um auch beim erfindungsgemäßen Untergestell die Reibung zwischen den beiden Gestellelementen, d.h. die Reibung zwischen dem ersten Gestellelement und dem auf diesem aufliegenden Verbindungselement des zweiten Gestellelementes minimal zu halten, ist es vorteilhaft, wenn das Verbindungselement mit einem reibungsmindernden abriebfesten Element, zweckmäßigerweise einer Leiste, ausgebildet ist.

Eine einfache Ausbildung des Untergestells und eine einfache Montage der Sitzplatte eines Sitzes auf dem erfindungsgemäßen Untergestell ist möglich, wenn die beiden Schenkelteile des zweiten Gestellelementes an ihrem von der zweiten Schwenkachse entfernten freien Endabschnitt mit Ansätzen zur Fixierung der Sitzplatte des Sitzes ausgebildet sind. Demselben Zweck ist es dienlich, wenn das erste Gestellelement an seinem von der ersten Schwenkachse entfernten freien Endabschnitt mit einer Auflage zur losen, beweglichen Lagerung der Sitzplatte des Sitzes ausgebildet ist. Ein solchermaßen ausgebildetes Untergestell ist einfach und zeitsparend mit einer geeigneten Sitzplatte eines Sitzes kombinierbar, so daß sich das erfindungsgemäße Untergestell in vorteilhafter Weise für diverse Sitze eignet.

Die Federeinrichtung greift beim erfindungsgemäßen Untergestell vorzugsweise am freien Endabschnitt des ersten Gestellelementes an. Es ist jedoch auch möglich, die Federeinrichtung an einer beliebigen anderen Stelle des Scherengestells des erfindungsgemäßen Untergestells angreifen zu lassen.

Ein Ausführungsbeispiel des erfindungsgemäßen Unterbaus für einen Sitz, insbes. für einen Fahrzeugsitz, ist in der Zeichnung schematisch dargestellt und wird nachfolgend beschrieben. Es zeigen:
- Fig. 1: eine geschnittene Ansicht eines Unterbaus, bei dem das Grundelement und die Federeinrichtung abschnittweise gezeichnet sind, und
- Fig. 2: eine Ansicht des Unterbaus gemäß Fig. 1 entlang der unter der Sitzplatte verlaufenden Schnittlinie II-II, so daß in Fig. 2 die Sitzplatte nicht dargestellt ist.

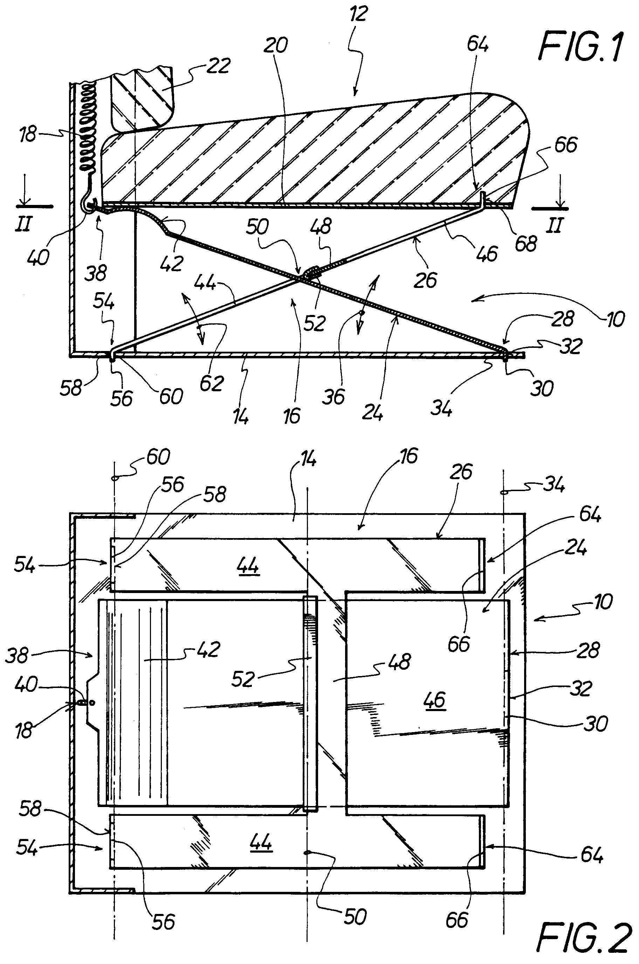

Die Figuren 1 und 2 zeigen in einer schematischen Darstellung einen Unterbau 10 für einen Sitz 12, insbes. für einen Fahrzeugsitz, wobei der Unterbau 10 ein Grundelement 14, ein auf dem Grundelement 14 angeordnetes Scherengestell 16 und eine Federeinrichtung 18 aufweist, die mit dem Scherengestell 16 und mit dem Grundelement 14 des Unterbaus 10 verbunden ist.

Der Sitz 12 weist eine Sitzplatte 20 und eine in Fig.1 nur abschnittweise angedeutete Rückenlehne 22 auf.

Das Scherengestell 16 weist zwei voneinander unabhängige Gestellelemente 24 und 26 auf, wobei das erste Gestellelement 24 z.B. als Flächenelement ausgebildet ist. Selbstverständlich wäre es auch möglich, das erste Gestellelement 24 als Rahmenelement auszubilden, um eine Gewichtsreduktion des Unterbaus 10 zu bewirken. Das erste Gestellelement 24 weist an seinem einen Endabschnitt 28 mindestens einen Ansatz 30 auf, der in ein Loch 32 hineinsteht, das im Grundelement 14 ausgebildet ist. Dadurch wird eine erste Schwenkachse 34 festgelegt, um die das erste Gestellelement 24 verschwenkbar ist, was in Fig. 1 durch den bogenförmigen Pfeil 36 angedeutet ist.

An dem vom ersten Endabschnitt 28 des ersten Gestellelementes 24 entfernten zweiten Endabschnitt 38 des ersten Gestellelementes 24 greift die Federeinrichtung 18 mit einem Befestigungsabschnitt 40 an.

Das erste Gestellelement 24 ist in der Nachbarschaft seines zweiten Endabschnittes 38 mit einer Auflage 42 ausgebildet, auf welcher die Sitzplatte 20 des Sitzes 12 lose aufliegt.

Das zweite Gestellelement 26 weist zwei voneinander beabstandete Schenkelteile 44 auf, zwischen welchen das erste Gestellelement 24 in Form eines Flächenelementes 46 vorgesehen ist. Die beiden Schenkelteile 44 sind miteinander mittels eines Verbindungselementes 48 mechanisch fest verbunden. Die beiden Gestellelemente 24 und 26 sind auf dem Grundelement 14 derart vorgesehen, daß sie sich überkreuzen -wie aus Fig. 1 ersichtlich ist-, wobei das Verbindungselement 48 auf dem ersten Gestellelement 24 in Form einer Linienberührung aufliegt und somit quasi eine Scherengestellachse 50 festlegt. Um die federnde Beweglichkeit des Scherengestells 16, d.h. der beiden Gestellelemente 24 und 26 nicht durch unerwünschte Reibung zu beeinträchtigen, ist es zweckmäßig, wenn das Verbindungselement 48 mit einer reibungsmindernden abriebfesten Leiste 52 oder einem ähnlichen Element ausgebildet ist.

Jedes Schenkelteil 44 des zweiten Gestellelementes 26 ist an seinem einen Endabschnitt 54 mit mindestens einem Ansatz 56 ausgebildet, wobei die Ansätze 56 in zugehörige Löcher 58 im Grundelement 14 eingesetzt sind. Durch die Ansätze 56 und die Löcher 58 wird eine zweite Schwenkachse 60 festgelegt, die zur ersten Schwenkachse 34 des ersten Gestellelementes 24 beabstandet und parallel vorgesehen ist. Um die zweite Schwenkachse 60 ist das zweite Gestellelement 26 verschwenkbar, was in Fig. 1 durch den bogenförmigen Pfeil 62 angedeutet ist.

Der zweite Endabschnitt 64 jedes der beiden Schenkelteile 44 ist mit wenigstens einem nach oben stehenden Ansatz 66 ausgebildet, die zur Fixierung der Sitzplatte 20 des Sitzes 12 in entsprechende Aussparungen 68 in der Sitzplatte 20 (sh. Fig. 1) einsteckbar bzw. einrastbar sind.

## Patentansprüche

1. Unterbau für einen Sitz (12), insbes. für einen Fahrzeugsitz, mit einem auf einem Grundelement (14) schwenkbeweglich angeordneten Scherengestell (16), das zur Lagerung einer Sitzplatte (20) des Sitzes (12) vorgesehen ist, wobei zwischen dem Scherengestell (16) und dem Grundelement (14) eine Federeinrichtung (18) vorgesehen ist, und das Scherengestell (16) zwei Gestellemente (24, 26) aufweist, von welchen das erste Gestellelement (24) mit seinem einen Endabschnitt (28) am Grundelement (14) befestigt und um eine erste Schwenkachse (34) verschwenkbar gelagert ist und wobei das zweite Gestellelement (26) mit seinem einen Endabschnitt (54) am Grundelement (14) befestigt und um eine zur ersten Schwenkachse (34) parallele zweite Schwenkachse (60) verschwenkbar gelagert ist, wobei eines der beiden Gestellelemente (24, 26) an der Sitzplatte (20) schwenkbeweglich befestigt ist,
**dadurch gekennzeichnet**,
daß die beiden Gestellelemente (24, 26) des Scherengestelles (16) nicht miteinander verbunden sind sondern nur aneinander anliegen, daß das erste Gestellelement (24) mit der Federeinrichtung (18) verbunden ist, und daß das zweite Gestellelement (26) zwei voneinander beabstandete Schenkelteile (44) aufweist, zwischen welchen das erste Gestellelement (24) vorgesehen ist und die beiden Schenkelteile (44) miteinander mittels eines Verbindungselementes (48) verbunden sind,welches auf dem ersten Gestellelement (24) in Form einer Linienberührung lose aufliegt.

2. Unterbau nach Anspruch 1,
**dadurch gekennzeichnet**,
daß das erste Gestellelement (24) als Flächen- bzw. Rahmenelement (46) ausgebildet ist, von dessen einem Endabschnitt (28) mindestens ein Ansatz (30) wegsteht, der zur Ausbildung der ersten Schwenkachse (34) in ein zugehöriges Loch (32) im Grundelement (14) einsetzbar ist.

3. Unterbau nach Anspruch 1,
**dadurch gekennzeichnet**,
daß die beiden Schenkelteile (44) des zweiten Gestellelementes (26) als Streifenelemente ausgebildet sind, die miteinander eine gemeinsame Ebene aufspannend mittels des Verbindungselementes (48) verbunden sind, wobei von jedem der beiden Streifenelemente an seinem einen Endabschnitt (54) mindestens ein Ansatz (56) wegsteht, die zur Ausbildung der zweiten Schwenkachse (60) jeweils in ein zugehöriges Loch (58) im Grundelement (14) einsetzbar sind.

4. Unterbau nach einem der vorhergehenden Ansprüche,
**dadurch gekennzeichnet**,
daß das Verbindungselement (48) mit einem reibungsmindernden abriebfesten Element, zweckmäßigerweise einer Leiste (52), ausgebildet ist.

5. Unterbau nach einem der vorhergehenden Ansprüche,
**dadurch gekennzeichnet**,
daß die beiden Schenkelteile (44) des zweiten Gestellelementes (26) an ihrem von der zweiten Schwenkachse (60) entfernten freien Endabschnitt (64) mit Ansätzen (66) zur Fixierung der Sitzplatte (20) des Sitzes (12) ausgebildet sind.

6. Unterbau nach einem der vorhergehenden Ansprüche,
**dadurch gekennzeichnet**,
daß das erste Gestellelement (24) an seinem von der ersten Schwenkachse (34) entfernten freien Endabschnitt (38) mit einer Auflage (42) zur losen, beweglichen Lagerung der Sitzplatte (20) des Sitzes (12) ausgebildet ist.

7. Unterbau nach einem der vorhergehenden Ansprüche,
**dadurch gekennzeichnet**,
daß die Federeinrichtung (18) am freien Endabschnitt (38) des ersten Gestellelementes (24) angreift.

## Claims

1. Substructure for a seat (12), in particular for a vehicle seat, having a scissors-type framework (16) which is arranged in a pivotable manner on a base element (14) and is provided in order to mount a seat panel (20) of the seat (12), a spring device (18) being provided between the scissors-type framework (16) and the base element (14), and the scissors-type framework (16) exhibiting two framework elements (24, 26) of which the first framework element (24) is fastened on the base element (14) by means of one end section (28) and is mounted such that it can be pivoted about a first pivot axis (34), and the second framework element (26) being fastened on the base element (14) by means of one end section (54) and being mounted such that it can be pivoted about a second pivot axis (60) parallel to the first pivot axis (34), one of the two framework elements (24, 26) being fastened in a pivotable manner on the seat panel (20); characterized in that the two framework elements (24, 26) of the scissors-type framework (16) are not connected to one another, but only rest against one another; in that the first framework element (24) is connected to the spring device (18); and in that the second framework element (26) exhibits two spaced-apart leg parts (44) between which the first framework element (24) is provided, and the two leg parts (44) are connected to one another by means of a connecting element (48) which bears loosely, with linear contact, on the first framework element (24).

2. Substructure according to Claim 1, characterized in that the first framework element (24) is designed as a sheet-like or frame element (46), from one end section (28) of which there projects at least one extension (30) which can be inserted into an associated hole (32) in the base element (14) in order to form the first pivot axis (34).

3. Substructure according to Claim 1, characterized in that the two leg parts (44) of the second framework element (26) are designed as strip elements which, defining a common plane, are connected to one another by means of the connecting element (48), at least one extension (56) projecting from each of the two strip elements at one end section (54) thereof, which extensions (56) can be inserted into an associated hole (58) in the base element (14) in each case in order to form the second pivot axis (60).

4. Substructure according to one of the preceding claims, characterized in that the connecting element (48) is designed with a friction-reducing wear-resistant element, expediently a moulding (52).

5. Substructure according to one of the preceding claims, characterized in that the two leg parts (44) of the second framework element (26) are designed, at their free end section (64) remote from the second pivot axis (60), with extensions (66) for fixing the seat panel (20) of the seat (12).

6. Substructure according to one of the preceding claims, characterized in that the first framework element (24) is designed, at its free end section (38) remote from the first pivot axis (34), with a rest (42) in order to mount the seat panel (20) of the seat (12) in a loose and movable manner.

7. Substructure according to one of the preceding claims, characterized in that the spring device (18) acts on the free end section (38) of the first framework element (24).

## Revendications

1. Structure support pour un siège (12), en particulier pour un siège de voiture, avec un système en ciseau (16) disposé de manière à pivoter sur un élément de base (14), ledit système en ciseau (16) étant prévu pour supporter une plaque de siège (20), un dispositif de rappel (18) étant prévu entre le système en ciseau (16) et l'élément de base (14), ledit élément en ciseau (16) comprenant deux éléments constitutifs (24, 26), le premier desdits éléments constitutifs (24) étant solidarisé à l'élément de base (14) au niveau de l'une de ses extrémités (28) et pivotant autour d'un premier axe de pivotement (34), alors que le second élément constitutif (26) est également fixé au niveau de l'une de ses extrémités (54) à l'élément de base (14) et pivote autour d'un second axe de pivotement (60) parallèle au premier, l'un des éléments constitutifs (24, 26) étant en outre solidarisé de manière pivotante à la plaque de siège (20).
caractérisée en ce que
les deux éléments constitutifs (24, 26) du système en ciseau (16) ne sont pas reliés l'un à l'autre, mais sont simplement au contigu l'un à l'autre, et en ce que le premier élément constitutif (24) est relié au dispositif de rappel (18), le second élément constitutif (26) comportant deux branches (44) éloignées l'une de l'autre, entre lesquelles se situe le premier élément constitutif (24), les deux branches (44) étant reliées l'une à l'autre au moyen d'un élément de liaison (48) qui repose sur le premier élément constitutif (24) selon un contact linéaire.

2. Structure support selon la revendication 1, caractérisée en ce que le premier élément constitutif (24) est conformé comme un élément de cadre ou un élément plan (46), dont l'une des extrémités (28) comporte au moins une excroissance (30) destinée à former le premier axe de pivotement (34) en étant inséré dans un trou approprié (32) de l'élément de base (14).

3. Structure support selon la revendication 1, caractérisée en ce que les deux branches (44) du deuxième élément constitutif (26) prennent la forme de bandes, qui sont reliées au moyen d'un élément de liaison (48) de manière à former un plan, les extrémités (54) des bandes comportant au moins une excroissance (56), que l'on peut insérer dans l'élément de base (14) au moyen de trous appropriés (58) qui sont destinés à l'établissement du second axe de pivotement (60).

4. Structure support selon l'une des revendications précédentes, caractérisée en ce que l'élément de liaison (48) est formé d'un élément de coincement à frottement réduit, par exemple un liteau à rainure.

5. Structure support selon l'une des revendications précédentes, caractérisé en ce que les deux branches (44) du second élément constitutif (26) comportent à leurs extrémités libres (64) éloignées du second axe de pivotement (60), des excroissances (66) destinées à les fixer à la plaque de siège (20).

6. Structure support selon l'une des revendications précédentes, caractérisé en ce que le premier élément constitutif (24) comporte à son extrémité libre (38), éloignée du premier axe de pivotement (34), un appui (42) permettant de supporter sans fixation la plaque de siège (20).

7. Structure support selon l'une des revendications précédentes, caractérisée en ce que le dispositif de rappel (18) s'applique à l'extrémité libre (38) du premier élément constitutif (24).
